# EUROPÄISCHE PATENTANMELDUNG

(11) **EP 1 033 499 A1**
(43) Veröffentlichungstag der Anmeldung: **06.09.2000**
(21) Anmeldenummer: 00104048.4
(22) Anmeldetag: 26.02.2000
(51) Int. Cl.: F16B 7/14

(54) **Einrichtung zum gegenseitigen Verspannen von teleskopartig ineinander geführten Profilschienen**

(30) Priorität: 03.03.1999 AT 35799
(71) Anmelder: Fulterer Gesellschaft m.b.H., 6890 Lustenau (AT)
(72) Erfinder: Fessler, Martin, 6912 Hörbranz (AT)
(74) Vertreter: Hefel, Herbert, Dipl.-Ing.

(57) **Zusammenfassung**

Bei einer Einrichtung zum gegenseitigen Verspannen von teleskopartig ineinander geführten Profilschienen (1, 2)weist mindestens eine der Profilschienen eine Langlochausnehmung auf, die sich in Achsrichtung der Profilschiene erstreckt, und ist ein Spannglied (6) vorgesehen, welches zwei Schenkel (5, 8) aufweist. Die Langlochausnehmung ist in der geführten Profilschiene (2) vorgesehen und eine Wand der führenden Profilschiene (1) weist einen Ausschnitt auf, und in diesem Ausschnitt ist ein zu dessen Form und Größe korrespondierendes Profilstück angeordnet, welches den einen Schenkel (5) des zwei Schenkel (5, 8) aufweisenden Spanngliedes (6) bildet, wobei die beiden Schenkel (5, 8) einen spitzen Winkel zwischen sich einschließen und der andere Schenkel (8) eine Länge aufweist, die etwas größer ist als die innere Querschnittsabmessung der geführten Profilschiene (2), in deren Richtung sich dieser Schenkel (8) erstreckt. Die beiden Schenkel (5, 8) sind über einen Steg (9) miteinander verbunden, dessen Breite kleiner ist als die Breite der Langlochausnehmung der geführten Profilschiene (2), und an der dem Scheitel der beiden Schenkel (5, 8) abgewandten Stirnseite des Schenkels (5) sichert ein Riegel (11) diesen Schenkel (5) in seiner in den Ausschnitt (4) eingelegten Lage.

## Beschreibung

Die Erfindung bezieht sich auf eine Einrichtung zum gegenseitigen Verspannen von teleskopartig ineinander geführten Profilschienen, wobei mindestens eine der Profitschienen eine Langlochausnehmung aufweist, die sich in Achsrichtung der Profilschiene erstreckt, und ein Spannglied vorgesehen ist, welches zwei Schenkel aufweist, die winkelig zueinander stehen.

Teleskopartig ineinander geführte Profilschienen, die gegeneinander verspannbar sind, sind in verschiedenen Ausführungsformen und aus verschiedenen Anwendungen bekannt. Beispielsweise im Möbelbau im Zusammenhang mit sogenannten Ausziehrahmen für Hochschränke. Die Schenkel dieser Rahmen bestehen aus kastenartigen Profilschienen. Um den Rahmen an die jeweilig vorgegebenen Abmessungen des Hochschrankes anpassen zu können, sind bei solchen Ausziehrahmen zumindest paarweise und parallele Rahmenschenkel in ihrer Länge veränderbar und einstellbar. Um die aneinander geführten Profilschienen gegeneinander zu verspannen, ist in der Regel eine Klemmschraube vorgesehen. In der geführten Profilschiene ist eine Gewindebohrung zur Aufnahme einer Klemmschraube, in der führenden Profilschiene ist eine Langlochausnehmung, die sich in Achsrichtung dieser führenden Profilschiene erstreckt. Ist die Schraube gelöst, so können die Profilschienen gegeneinander verschoben werden. Ist die Schraube angezogen, so sind die Profilschienen gegeneinander verspannt. Zur Betätigung dieser Klemmschraube, deren Kopf an den Seitenrändern der erwähnten Langlochausnehmung unter Druck anliegt, wenn die Schraube angezogen ist, ist ein Schraubenzieher erforderlich.

Aus der US 4 610 487 A ist eine Ausziehvorrichtung bekannt, deren paarweise vorgesehene Schienen mittels in Käfigen angeordneten Kugeln gegeneinander verschiebbar sind. Die an einem Möbelkorpus festlegbare, einen U-förmigen Querschnitt aufweisende Möbelschiene des einen Schienenpaares trägt an ihrem vertikalen Steg einen Gummipuffer, der randseitig von winkelförmigen Laschen gehalten ist. Dieser Gummipuffer besitzt eine zentrale Bohrung, in welche ein Bolzen ragt, der einen von der Kreisform abweichenden Querschnitt aufweist. Dieser Bolzen ist mit einem seitlich der Schiene angeordneten Hebel verdrehbar.

In der einen Stellung des Hebels ist die ausziehbare Schiene gegenüber der feststehenden Möbelschiene frei beweglich. Wird der Hebel um 90° gedreht, dann wird dadurch der Gummipuffer verformt, wodurch seine im wesentlichen horizontal verlaufenden Flanken an die Innenseite der Wangen der ausziehbaren Schiene gedrückt werden und dadurch deren jeweilige Lage gegenüber der feststehenden Möbelschiene fixiert. Solche Feststelleinrichtungen, über welche nur geringe Haltekräfte aufgebracht werden können, sind in der Regel bei solchen Ausziehvorrichtungen vorgesehen, welche Bedienungstablare für elektronische Datenverarbeitungsanlagen tragen und welche beispielsweise unter die Tischplatte eines Schreibtisches einschiebbar sind. Ist das Tablar gegenüber der Tischplatte des Schreibtisches vorgezogen, so soll es hinsichtlich seiner Lage fixiert sein, damit die Tasten des Tablars ordnungsgemäß und rasch betätigt werden können.

Auch bei teleskopierbaren Stäben mit rundem Querschnitt werden Spreizdorne mit einem von der Kreisform abweichenden Querschnitt verwendet (WO 95/25 899). Die Spreizung wird hier dadurch erreicht, daß die beiden koaxial liegenden Stäbe um ihre Längsachse relativ zueinander verdreht werden. Der Spreizdorn drückt dabei gegen Klemmbacken. Bei beiden vorbekannten Konstruktionen können die Spreizkräfte ohne Beiziehung von Werkzeugen aufgebracht werden. Diese beiden vorbekannten Konstruktionen sind aber beispielsweise für die einen ausziehbaren Rahmen für Hochschränke bildenden kastenartigen Profilschienen nicht verwendbar, da einerseits kastenartige, teleskopierbar ineinander geführte Profilschienen nicht um ihre gemeinsame Achse relativ zueinander verdreht werden können und andererseits mit einem verformbaren Gummipuffer nicht auf Dauer hohe und verläßliche Klemmkräfte erzielbar sind.

In der prioritätsälteren, nicht vorveröffentlichten DE 198 45 976 A1 ist eine Einrichtung zum gegenseitigen Verspannen zweier teleskopartig ineinander geführten Profilschienen gezeigt, welche ohne Zuhilfenahme von Werkzeugen betätigt werden kann, wobei möglichst wenige nach außen vorstehende Teile vorgesehen sind, ohne jedoch die Betätigungsmöglichkeit der Verspannvorrichtung zu beeinträchtigen. Im modernen Möbelbau werden immer mehr Beschläge gefordert, die soweit wie möglich ohne Beiziehung von Werkzeugen montiert und justiert werden können. Dieser Forderung wird bei dieser bekannten Einrichtung dadurch Rechnung getragen, daß eine Wand der führenden Profilschiene einen über die Breite der Profilschiene sich erstreckenden Ausschnitt aufweist, dessen stirnseitige Begrenzungskanten Kreisbögen bilden, daß die Tiefe des Ausschnittes - gemessen rechtwinkelig zur Längsachse der Profilschiene - etwa der Materialstärke dieser Profilschiene entspricht und in dem Ausschnitt eine zu dessen Form und Größe korrespondierende Scheibe angeordnet ist, welche an ihrer einen Seite den Spreizbolzen trägt und der Klemmkörper mehrere Klemmbacken aufweist.

Eine Einrichtung der eingangs genannten Art ist aus der US-PS 1,447,519 bekannt. Es ist eine Einrichtung zum Verspannen zweier Profilschienen gezeigt, welche ein Spannglied aufweist, das zwei winkelig zueinander stehende Schenkel besitzt. Das Spannglied ist in der geführten Schiene gelagert, weiche als U-Profil ausgebildet ist. An der offenen Seite dieses U-Profils liegt der erste Schenkel des Spannglieds an der Innenseite des führenden Profils an. Der zweite Schenkel des Spanngliedes erstreckt sich längs der gegenüberliegenden Außenseite der führenden Schiene, welche in diesem Bereich eine Langlochausnehmung aufweist. Von einem durch diese Langlochausnehmung ragenden Federelement wird der zweite Schenkel vorgespannt, so daß der erste Schenkel gegen die Innenwand der führenden Profilschiene gedrückt wird.

Aufgabe der Erfindung ist es, eine hinsichtlich der Herstellung und hinsichtlich der Handhabung einfache Einrichtung der eingangs genannten Art bereitzustellen, bei der möglichst wenige nach außen vorstehende Teile vorgesehen sind. Gemäß der Erfindung gelingt dies dadurch, daß die Langlochausnehmung in der geführten Profilschiene vorgesehen ist und eine Wand der führenden Profilschiene einen Ausschnitt aufweist und in diesem Ausschnitt ein zu dessen Form und Größe korrespondierendes Profilstück angeordnet ist, welches den einen Schenkel des zwei Schenkel aufweisenden Spanngliedes bildet, wobei die beiden Schenkel einen spitzen Winkel zwischen sich einschließen und der andere Schenkel eine Länge aufweist, die etwas größer ist als die innere Querschnittsabmessung der geführten Profilschiene, in deren Richtung sich dieser Schenkel erstreckt, und die Breite dieses Schenkels kleiner ist als die innere Breite dieser geführten Profilschiene und die beiden Schenkel über einen Steg miteinander verbunden sind, dessen Breite kleiner ist als die Breite der Langlochausnehmung der geführten Profilschiene, und an der dem Scheitel der beiden Schenkel abgewandten Stirnseite des Schenkels ein Riegel diesen Schenkel in seiner in den Ausschnitt eingelegten Lage sichert.

Zweckmäßige Ausgestaltungen der Erfindung sind in den Unteransprüchen festgehalten.

Die Zeichnung veranschaulicht ein Ausführungsbeispiel der Erfindung, ohne jedoch diese dadurch einzuschränken. Es zeigen:
Fig. 1 eine Teilansicht zweier teleskopartig ineinander geführter Profilschienen und
Fig. 2 deren Seitensicht, Blickrichtung Pfeil A in Fig. 1;
Fig. 3 einen Querschnitt nach der Linie III-III in Fig. 1;
die Fig. 4 bis 8 das Spannglied in Ansicht, in Seitensicht, von oben - Blickrichtung Pfeil B in Fig. 4, von unten - Blickrichtung Pfeil C in Fig. 4 und von hinten;
Fig. 9 einen vertikalen Teillängsschnitt durch Fig. 2 und
Fig. 10 einen Querschnitt - Schnittlinie X-X in Fig. 9.

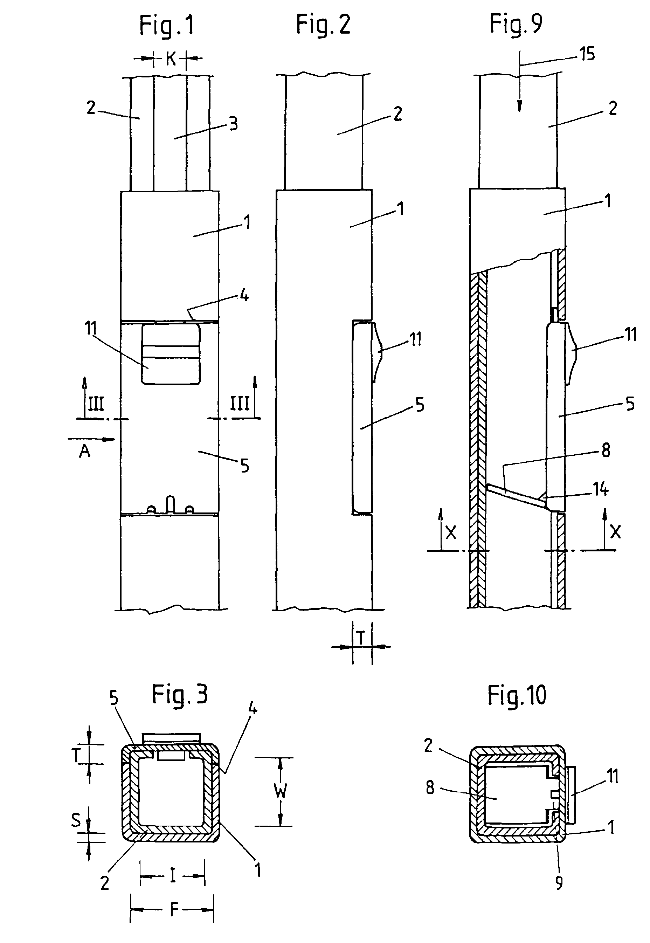

Die beiden Profilschienen 1 und 2 besitzen beim gezeigten Ausführungsbeispiel einen kastenförmigen Querschnitt, wobei der Querschnitt der führenden Profilschiene 1 umfangsgeschlossen ist und die geführte Profilschiene 2 einen über ihre Länge durchlaufenden Längsschlitz 3 aufweist, der eine Langlochausnehmung bildet. Der Querschnitt der geführten Profilschiene 2 kann in diesem Fall als U-förmiger Querschnitt mit hinterschnittenen Wangen bezeichnet werden. Die inneren Weiten der führenden Profilschiene 1 entsprechen den Außenabmessungen der geführten Profilschiene 2. In der dem Betrachter - Fig. 1 - zugewandten Außenwand der führenden Profilschiene 1, die der geschlitzten Seite der geführten Profilschiene 2 benachbart liegt, ist ein Ausschnitt 4 ausgespart mit geraden oberen und unteren Begrenzungskanten. Dieser Ausschnitt 4 erstreckt sich über die gesamte Breite F der führenden Profilschiene 1, und seine Tiefe ist um ein geringes Maß größer als die Stärke S des Materials, aus dem diese Profilschiene 1 gefertigt ist. In diesem Ausschnitt 4 liegt ein Profilstück, das durch einen Schenkel 5 eines Spanngliedes 6 gebildet ist. Dieser Schenkel 5 hat seitlich umgebördelte Ränder 7, so daß dieser Schenkel in der Ausnehmung 4 die Umfangskontur der führenden Profilschiene 1 ergänzt und mit deren Umfangskontur bündig abschließt.

Das Spannglied 6 besitzt zwei Schenkel, nämlich den bereits erwähnten Schenkel 5 sowie den kurzen Schenkel 8, wobei diese beiden Schenkel 5, 8 einen spitzen Winkel miteinander einschließen. Die Länge des einen Schenkels 5 entspricht der Länge des Ausschnittes 4, die Länge l des anderen, kurzen Schenkels 8 ist etwas größer als die innere Querschnittsabmessung W der geführten Profilschiene 2, in deren Richtung sich dieser Schenkel 8 bei eingesetztem Spannglied 6 erstreckt. Seine Breite G ist kleiner als die innere Breite I des geführten Profilstückes 2.

Diese beiden Schenkel 5 und 8 des Spanngliedes 6 sind über einen Steg miteinander verbunden, dessen Breite kleiner ist als die Weite K des Längsschlitzes 3 der geführten Profilschiene 2. An der dem Steg 9 abgewandten Stirnseite 10 des langen Schenkels 5 ist ein Riegel 11 verschiebbar (Pfeil 12) gelagert, wobei zweckmäßigerweise dieser Riegel 11 in seiner Riegelstellung durch eine Raste gehalten ist.

Dieser Riegel 11 besitzt einen I-förmigen Querschnitt, wobei der schmale mittlere Steg dieses Riegels 11 in einem von der Stirnseite 10 des Schenkels 5 ausgehenden Einschnitt liegt. Die Breite des unteren Querteiles dieses Riegels 11 ist etwas kleiner als die Weite K des Längsschlitzes 3 der geführten Profilschiene 2. Die Breite des vom Ausschnitt 4 der führenden Profilschiene 1 aufzunehmenden Schenkels 5 des Spanngliedes 6 entspricht der Breite F dieser Profilschiene 1. Der Querschnitt des vom Ausschnitt 4 der führenden Profilschiene 1 aufzunehmenden Schenkels 5 des Spanngliedes 6 ist U-förmig gestaltet, wobei die Höhen T der seitlichen Wangen 7 dieses Querschnittes nur einen Bruchteil des diese Wangen 7 verbindenden Steges betragen. Der die beiden Schenkel 5, 8 des Spanngliedes 6 verbindende Steg 9 ist durch eine in der Ebene dieses Steges 9 vorgesehene Einlagestütze 14 versteift. Die beiden Schenkel 5, 8 des Spanngliedes 6 sind unterschiedlich lang, und das Verhältnis dieser beiden Längen beträgt ca. 1 : 2,5. Ist das Spannglied 6 bestimmungsgemäß eingesetzt, so ist der kurze Schenkel 8 dieses Spanngliedes gegen die Richtung (Pfeil 15) der Kraft gerichtet, die auf die geführte Profilschiene 2 durch deren Belastung ausgeübt ist.

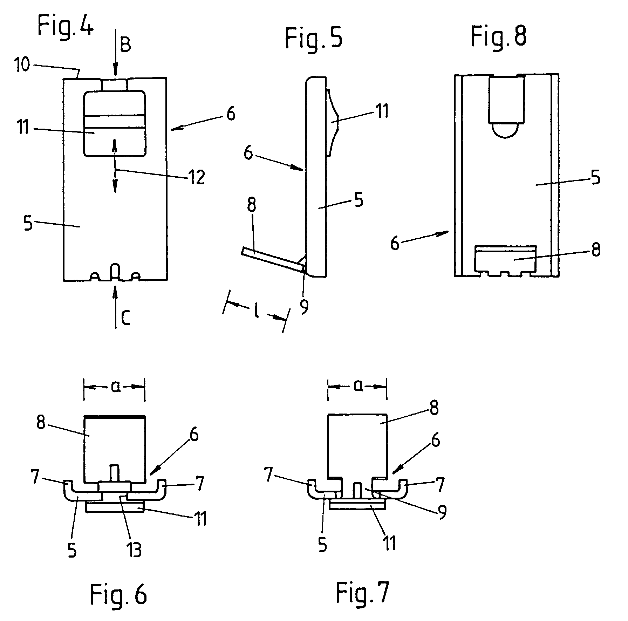

Zur Montage dieses Spanngliedes 6 werden die beiden Profilschienen 1, 2 soweit auseinandergezogen, daß das innere Stirnende der geführten Profilschiene 2 im Ausschnitt 4 liegt, und zwar zweckmäßigerweise in dessen mittlerem Längsbereich. Nun wird in dieses stirnseitige Ende der geführten Profilschiene 2 der Schenkel 8 des Spanngliedes 6 eingeschoben, dessen Riegel 11 vorerst zurückgeschoben ist, wie aus Fig. 4 zu entnehmen ist. Nun wird die geführte Profilschiene 2 soweit in die führende Profilschiene eingeschoben, bis der Teleskopstab die gewünschte Länge aufweist. Dann wird der Schenkel 5 des Spanngliedes 6, der vorerst gegenüber der Längsachse der beiden Profilschienen 1, 2 einen spitzen Winkel einschließt, in die Ausnehmung 4 gedrückt, so daß dieser Schenkel 5 mit der Profilschiene 1 bündig liegt. Dazu ist eine Kraft erforderlich, die von der Verformbarkeit des kurzen Schenkels 8 abhängt. Hat der Schenkel 5 diese bündige Lage mit der führenden Profilschiene 1 eingenommen, so wird der Riegel 11 vorgeschoben, der nun die obere Begrenzungskante (Fig. 1) des Ausschnittes 4 untergreift und somit das Spannglied 6 in der aus den Fig. 1, 2 und 9 ersichtlichen Lage unverrückbar festhält. Die Vorderkante des Schenkels 8 (Fig. 9) ist klemmend an die Innenwand der geführten Profilschiene 2 gedrückt und hält damit diese gegenüber der führenden Profilschiene 1 unverrückbar fest.

Soll die Länge des so gebildeten Teleskopstabes verändert werden, so wird der Riegel 11 zurückgeschoben. Die vom Spannglied 6 aufgrund der erwähnten Abmessungen und Verformbarkeit des Schenkels 8 ausgeübte Haltekraft schwenkt nun den Schenkel 5 hoch, wodurch die Klemm- und Haltekraft aufgehoben ist, so daß die beiden Profilschienen 1 und 2 wiederum gegeneinander in ihrer Längsrichtung verschoben werden können. Nach Erreichen der gewünschten Länge des Teleskopstabes wird der Schenkel 5 wieder gegen die Profilschiene 1 und in die Ausnehmung 4 hineingedrückt und der Riegel 11 in seine Riegelstellung eingeschoben, in der er die Oberkante des Ausschnittes 4 formschlüssig untergreift. In dieser Riegelstellung ist der Riegel zweckmäßigerweise durch eine hier nicht gezeigte Raste festgehalten.

Es liegt im Rahmen der Erfindung, den Riegel an der oberen Begrenzungskante des Ausschnittes 4 verschiebbar zu lagern. Die Erfindung ist nicht auf Profilschienen mit kastenförmigem Querschnitt beschränkt. Es können z. B. auch Rohre mit rechteckigem, vieleckigem oder rundem Querschnitt in der geschilderten Weise miteinander verspannt werden. Das Spannglied 6 ist der jeweiligen Querschnittsform der Profilschienen anzupassen. Sind als Profilschienen Rohre mit kreisrundem Querschnitt vorgesehen, so wird der Schenkel 8 beispielsweise eine elliptische Form erhalten, wogegen der Schenkel 5 als zylindrische Schale ausgebildet wird.

Solche teleskopierbare Stäbe mit veränderbarer und einstellbarer Länge können für viele Zwecke eingesetzt werden, beispielsweise können sie die Schenkel von Rahmen bilden, wie sie bei Hochschrankauszügen verwendet werden. Auch Stützen für Regale können in der beschriebenen Weise ausgebildet sein.

### Legende

### zu den Hinweisziffern:

- 1: Profilschiene
- 2: Profilschiene
- 3: Langloch - Längsschlitz
- 4: Ausschnitt
- 5: Schenkel
- 6: Spannglied
- 7: Wangen
- 8: Schenkel
- 9: Steg
- 10: Stirnseite
- 11: Riegel
- 12: Pfeil
- 13: Einschnitt
- 14: Einlagestütze
- 15: Pfeil

## Patentansprüche

1. Einrichtung zum gegenseitigen Verspannen von teleskopartig ineinander geführten Profilschienen (1, 2), wobei mindestens eine der Profilschienen (2) eine Langlochausnehmung (3) aufweist, die sich in Achsrichtung der Profilschiene erstreckt, und ein Spannglied (6) vorgesehen ist, welches zwei Schenkel (5, 8) aufweist, die winkelig zueinander stehen, dadurch gekennzeichnet, daß die Langlochausnehmung (3) in der geführten Profilschiene (2) vorgesehen ist und eine Wand der führenden Profilschiene (1) einen Ausschnitt (4) aufweist und in diesem Ausschnitt (4) ein zu dessen Form und Größe korrespondierendes Profilstück angeordnet ist, welches den einen Schenkel (5) des zwei Schenkel (5, 8) aufweisenden Spanngliedes (6) bildet, wobei die beiden Schenkel (5, 8) einen spitzen Winkel zwischen sich einschließen und der andere Schenkel (8) eine Länge (l) aufweist, die etwas größer ist als die innere Querschnittsabmessung (W) der geführten Profilschiene (2), in deren Richtung sich dieser Schenkel (8) erstreckt, und die Breite dieses Schenkels (8) kleiner ist als die innere Breite (I) dieser geführten Profilschiene (2) und die beiden Schenkel (5, 8) über einen Steg (9) miteinander verbunden sind, dessen Breite kleiner ist als die Breite (K) der Langlochausnehmung (3) der geführten Profilschiene (2), und an der dem Scheitel der beiden Schenkel (5, 8) abgewandten Stirnseite (10) des Schenkels (5) ein Riegel (11) diesen Schenkel (5) in seiner in den Ausschnitt (4) eingelegten Lage sichert.

2. Einrichtung nach Anspruch 1, dadurch gekennzeichnet, daß der Riegel (11) an der dem Scheitel abgewandten Stirnseite (10) des im Ausschnitt (4) der Profilschiene (1) angeordneten Schenkels (5) verschiebbar gelagert ist.

3. Einrichtung nach Anspruch 2, dadurch gekennzeichnet, daß der Riegel (11) einen I-förmigen Querschnitt besitzt, wobei der schmale mittlere Steg dieses Riegels (11) in einem von der Stirnseite (10) des Schenkels (5) ausgehenden Einschnitt (13) verschiebbar gelagert ist und die Breite des unteren Querteils des I-förmigen Riegels (11) schmäler ist als die Breite (K) der Langlochausnehmung (3) in der geführten Profilschiene (2).

4. Einrichtung nach einem der Ansprüche 1 bis 3, dadurch gekennzeichnet, daß die Breite des vom Ausschnitt (4) der führenden Profilschiene (1) aufzunehmenden Schenkels (5) des Spanngliedes (6) der Breite (F) dieser Profilschiene (1) entspricht.

5. Einrichtung nach Anspruch 4, dadurch gekennzeichnet, daß der Querschnitt des vom Ausschnitt (4) der führenden Profilschiene (1) aufzunehmenden Schenkels (5) des Spanngliedes (6) U-förmig gestaltet ist, wobei die Höhe (T) der seitlichen Wangen (7) dieses U-förmigen Querschnittes nur einen Bruchteil des diese Wangen (7) verbindenden Steges beträgt.

6. Einrichtung nach einem der Ansprüche 1 bis 5, dadurch gekennzeichnet, daß der die beiden Schenkel (5, 8) des Spanngliedes (6) verbindende Steg (9) durch eine in der Ebene dieses Steges (9) vorgesehene Einlagestütze (14) versteift ist.

7. Einrichtung nach einem der Ansprüche 1 bis 6, dadurch gekennzeichnet, daß die beiden Schenkel (5, 8) des Spanngliedes (6) unterschiedlich lang sind und das Verhältnis dieser beiden Längen ca. 1 : 2,5 beträgt.

8. Einrichtung nach einem der Ansprüche 1 bis 7, dadurch gekennzeichnet, daß der kurze Schenkel (8) des Spanngliedes (6) gegen die Richtung der Kraft gerichtet ist, die auf die geführte Profilschiene (2) durch deren Belastung ausgeübt ist.
